# EUROPÄISCHE PATENTSCHRIFT

(11) **EP 1 900 978 B1**
(45) Veröffentlichungstag und Bekanntmachung des Hinweises auf die Patenterteilung: **14.04.2010**
(21) Anmeldenummer: 06019309.1
(22) Anmeldetag: 15.09.2006
(51) Int. Cl.: F16J 15/06

(54) **Tragkörper zum fluidischen Verbinden von Maschinenelemente**
Supporting body for fluidic connection from machine elements
Corps de support pour connection fluidique d'éléments de machine

(43) Veröffentlichungstag der Anmeldung: 19.03.2008
(73) Patentinhaber: Carl Freudenberg KG, 69469 Weinheim (DE)
(72) Erfinder: Lauer, Frank, 69168 Wiesloch (DE); Röhner, Gerhard, 69502 Hemsbach (DE)

(56) Entgegenhaltungen:
- EP-A- 0 695 898
- EP-A1- 0 691 488
- DE-A1- 3 006 656
- DE-U1- 20 018 696
- US-A1- 5 121 929
- US-A1- 5 659 132

## Beschreibung

### Technisches Gebiet

Die Erfindung betrifft einen Tragkörper zum fluiddichten Verbinden von Maschinenelementen der eine Durchbrechung zum Durchführen von Medien aufweist und eine erste Ausnehmung die der Durchbrechung zugeordnet ist und die mit einer Dichtung versehen ist sowie eine Leitergeometrie die teilweise in den Tragkörper eingebettet ist.

### Stand der Technik

Derartige Tragkörper sind allgemein bekannt , z.B. aus Dokument EP-A- 0 695 898, und werden zur Verbindung von medienführenden Aggregaten verwendet. Der Tragkörper wird meist im Spritzgießverfahren hergestellt und besteht aus einem thermoplastischen Werkstoff. Der Tragkörper ist mit Ausnehmungen versehen in denen ein dichtend wirkendes Elastomer angeordnet wird. In den Tragkörper sind Leitergeometrien zum Verbinden elektronischer Bauteile eingebettet. Die Leitergeometrien verbinden Bauelemente die in der Durchbrechung angeordnet sind mit Bauelementen die außerhalb angeordnet sind. Hierbei ist nachteilig, dass thermoplastische Werkstoffe nach dem Spritzgießen schrumpfen und dass die Werkstoffe von Leitergeometrie und Tragkörper unterschiedliche Ausdehnungskoeffizienten aufweisen, so dass sich Leckagen zwischen Leitergeometrie und Tragkörper ergeben können.

### Darstellung der Erfindung

Der Erfindung liegt die Aufgabe zugrunde, einen Tragkörper mit einer dauerhaft dichten Durchführung der Leitergeometrie bereitzustellen,

Diese Aufgabe wird mit den Merkmalen von Anspruch 1 gelöst. Auf vorteilhafte Ausgestaltungen nehmen die Unteransprüche Bezug.

Zur Lösung der Aufgabe weist der Tragkörper eine zweite Ausnehmung auf und die Leitergeometrie ist abschnittsweise in der zweiten Ausnehmung angeordnet und die weitere Ausnehmung ist mit einer zweiten Dichtung versehen. Die weitere Dichtung umgibt dabei die in der zweiten Ausnehmung angeordnete Leitergeometrie. Als Dichtungsmaterial kommt ein elastomerer Werkstoff wie FKM oder NBR in Frage, der die unterschiedlichen Ausdehnungskoeffizienten von Tragkörper und Leitergeometrie ausgleicht. Bei entsprechender Vorbehandlung von Tragkörper und Leitergeometrie ergibt sich eine feste stoffschlüssige Verbindung der weiteren Dichtung an diesen Bauteilen, so dass eine Leckage zuverlässig vermieden wird.

Die erste Ausnehmung und die zweite Ausnehmung können benachbart zueinander angeordnet sein. Dadurch können die Dichtung und die weitere Dichtung in einem Arbeitsschritt hergestellt werden. Die Herstellung der Dichtungen erfolgt vorzugsweise im Spritzgießverfahren.

Beide Stirnseiten des Tragkörpers können eine erste Ausnehmung aufweisen. Hierbei sind beide Stirnseiten mit einer Dichtung versehen. Beide Ausnehmungen sind über die weitere Ausnehmung miteinander verbunden, so dass alle drei Dichtungen in einem Arbeitsschritt hergestellt werden können. Die weitere Ausnehmung bildet dabei einen Überlauf durch den das Dichtungsmaterial in die beiden Ausnehmungen strömen kann.

Der Tragkörper und die Leitergeometrie können mit einem Bindemittel vorbehandelt sein. Das Bindemittel beispielsweise ein Silan oder Phenolharz verbessert die Bindung des Dichtungswerkstoffs an dem Tragkörper, wodurch die Dichtwirkung verbessert wird.

Die Dichtung und die weitere Dichtung können materialeinheitlich und einstückig ausgebildet sein. Es ist kostengünstiger alle Dichtungen in einem Arbeitsschritt herzustellen und es verbessert sich die Dichtfunktion.

Der Tragkörper kann aus einem thermoplastischen Werkstoff gebildet sein. Formteile aus thermoplastischen Werkstoffen beispielsweise Polyamid oder Polypropylensulfid können kostengünstig im Spritzgießverfahren hergestellt werden

Die Leitergeometrie kann aus Kupfer-Lefterbahnen bestehen. Die Leitergeometrie kann einzelne Leiter oder mehrere auf einem Trägersubstrat zusammengefassten Leiter umfassen. Die Leitergeometrie kann auch aus einem Blech ausgestanzt werden. Der elastomere Werkstoff bildet eine stoffschlüssige Verbindung mit dem Metall, was durch eine Vorbehandlung mit einem Bindemittel noch verbessert werden kann. Die weitere Dichtung bildet einen Isolator der Fehlerströme zwischen den einzelnen Leitern verhindert.

Die Leitergeometrie kann einen Sensor, der in der Durchbrechung angeordnet ist, mit einer außerhalb angeordneten Auswerteeinheit verbinden. Der Sensor befindet sich im Medienstrom und ermöglicht die Erfassung von Zustandsparametern des abzudichtenden Mediums. Durch die leckagedichte Durchführung über die Leitergeometrie erfolgt eine Übertragung der gemessenen Werte zu der außerhalb angeordneten Auswerteeinheit. Der Sensor kann medienseitig mit Elastomer bedeckt sein. Dadurch ergibt sich eine Kammer in der der Sensor gekapselt ist und vor Medieneinflüssen geschützt ist. Diese Elastomerschicht kann aus einem wärmeleitfähigen Elastomer, beispielsweise einem Silikon, bestehen. Offene Sensoren sind reaktionsschnell und gekapselte Sensoren sind unempfindlich gegenüber aggressiven Medien.

Besonders vorteilhaft ist der erfindungsgemäße Tragkörper als Element zum Verbinden von Kraftfahrzeugmotor-Komponenten mit einem Kraftfahrzeugmotorgehäuse. Mittels des Tragkörpers erfolgt beispielsweise eine Anbindung des Ölfilters an das Motorgehäuse. Der Tragkörper mit den integrierten Dichtungen bildet eine Dichtplatte durch die eine dichte Verbindung der Komponenten mit dem Gehäuse erfolgen kann und die integrierte Leitergeometrie ermöglicht die Anordnung von Sensoren die in das durch die Durchbrechung fließende Öl ragen. Hierbei können verschiedene Zustandsparameter des Öls bestimmt werden und die Messwerte können leckagefrei zur Auswerteeinheit übertragen werden.

Der Tragkörper kann rohrförmig ausgebildet sein, wobei der Tragkörper dann an seinem Außenumfang eine ringförmige Dichtung aufweist. Derartige Tragkörper werden zum Verbinden von Maschinenelementen mit kreisförmigen Ausnehmungen verwendet, wobei der Tragkörper in die Ausnehmungen gesteckt wird.

### Kurzbeschreibung der Zeichnung

Einige Ausführungsbeispiele des erfindungsgemäßen Kunststoffformteils werden nachfolgend anhand der Figuren näher erläutert. Diese zeigen, jeweils schematisch:
- Fig. 1: ein Kunststoffformteil ohne Dichtungen;
- Fig. 2: ein Kunststoffformteil mit Dichtungen.

### Ausführung der Erfindung

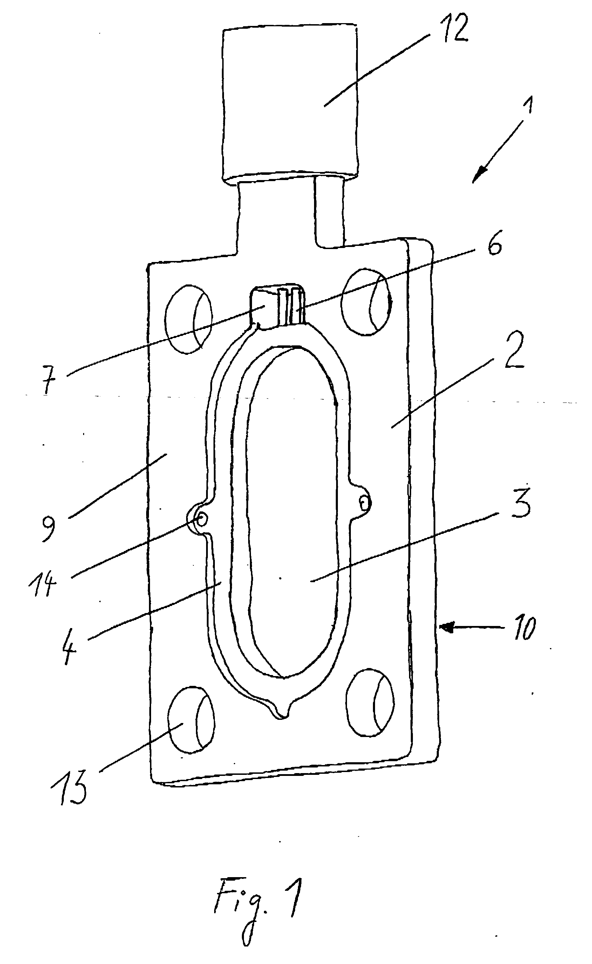

Figur 1 zeigt ein Kunststoffformteil 1 zum Verbinden von Maschinenelementen, in dieser Ausführung zum Verbinden von Kraftfahrzeugmotor-Komponenten mit einem Kraftfahrzeugmotorgehäuse. Das Kunststoffformteil 1 besteht aus einem Tragkörper 2 der eine Durchbrechung 3 zum Durchführen von Medien, beispielsweise Motoröl, aufweist. Der Tragkörper 2 besteht aus einem thermoplastischen Werkstoff dessen Formgebung im Spritzgießverfahren erfolgt. Benachbart zu der Durchbrechung 3 ist auf beiden Stirnseiten 9, 10 des Tragkörpers 2 ist eine erste Ausnehmung 4 vorgesehen, die mit einer Dichtung 5 versehen werden kann. Um die Haftung der Dichtung 5 zu verbessern, weist die erste Ausnehmung 4 zusätzliche Vertiefungen 14 in Form von Sacklöchern auf. In den Tragkörper 2 ist eine Leitergeometrie 6 mit Leitern aus einem ausgestanzten Kupferblech so eingebettet, dass ein Teil der Leitergeometrie 6 in die Durchbrechung 3 und dort beispielsweise Sensoren angeschlossen werden können. Ein dort angeordneter Sensor ermöglicht die Erfassung von Zustandsparametern des abzudichtenden Mediums. Ein anderer Teil der Leitergeometrie 6 ragt nach außen und mündet in dieser Ausführung in einer Steckverbindung 12, die einstückig und materialeinheitlich mit dem Tragkörper 2 ausgebildet ist. Die Steckverbindung 12 kann beispielsweise an die Bordelektronik oder eine Auswerteeinheit angeschlossen werden. Der Tragkörper 2 weist eine zweite Ausnehmung 7 (in dieser Ausführung eine Durchbrechung) auf durch die die Leitergeometrie 6 verläuft, so dass diese frei liegt. Die zweite Ausnehmung 7 kann mit einer weiteren Dichtung 8 versehen werden. Die zweite Ausnehmung 7 ist unmittelbar benachbart zu der ersten Ausnehmung 7. Beide Ausnehmungen 4, 7 sowie die Leitergeometrie 6 sind mit einem Bindemittel vorbehandelt, um die Haftung des Dichtungswerkstoffs der beiden Dichtungen 5, 8 zu verbessern. Der Tragkörper 2 weist zusätzlich Bohrungen 13 auf, die der Befestigung der Maschinenelemente dienen

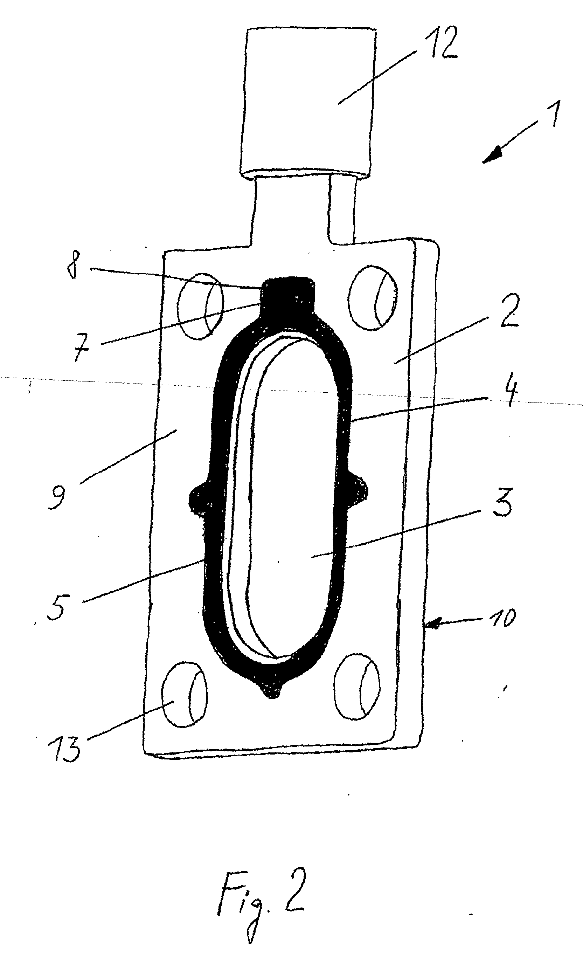

Figur 2 zeigt ein Kunststoffformteil 1 gemäß Figur 1 bei dem die Ausnehmungen 4, 7 mit einem Dichtungswerkstoff ausgefüllt sind, so dass sich eine erste Dichtung 5 und eine zweite Dichtung 8 ergeben. Als Dichtungswerkstoff werden elastomere, spritzgießfähige Werkstoffe, beispielsweise Silikone in Betracht. Der Dichtungswerkstoff bildet eine stoffschlüssige und damit dichte Verbindung zu dem Tragkörper 2 und der Leitergeometrie 6. Beide Dichtungen 5, 8 werden aufgrund der unmittelbaren Verbindung der Ausnehmungen 4, 7 in einem Arbeitsgang hergestellt und sind dadurch materialeinheitlich und einstückig ausgebildet.

## Patentansprüche

1. Tragkörper (1) zum fluiddichten Verbinden von Maschinenelementen, der eine Durchbrechung (3) zum Durchführen von Medien aufweist und eine erste Ausnehmung (4) die der Durchbrechung (3) zugeordnet ist und die mit einer Dichtung (5) versehen ist sowie eine Leitergeometrie (6) die teilweise in den Tragkörper (2) eingebettet ist, **dadurch gekennzeichnet, dass** der Tragkörper (2) eine zweite Ausnehmung (7) aufweist und dass die Leitergeometrie (6) abschnittsweise in der zweiten Ausnehmung (7) angeordnet ist und dass die zweite Ausnehmung (7) mit einer weiteren Dichtung (8) versehen ist.

2. Tragkörper nach Anspruch 1, **dadurch gekennzeichnet, dass** die erste Ausnehmung (4) und die zweite Ausnehmung (7) benachbart zueinander angeordnet sind.

3. Tragkörper nach Anspruch 1 oder 2, **dadurch gekennzeichnet, dass** beide Stirnseiten (9,10) eine erste Ausnehmung (4) aufweisen.

4. Tragkörper nach einem der Ansprüche 1 bis 3, **dadurch gekennzeichnet, dass** die Wandungen des Tragkörpers (1) und die Leitergeometrie (6) mit einem Bindemittel vorbehandelt sind.

5. Tragkörper nach einem der Ansprüche 1 bis 4, **dadurch gekennzeichnet, dass** die Dichtung (5) und die weitere Dichtung (8) materialeinheitlich und einstückig ausgebildet sind.

6. Tragkörper nach einem der Ansprüche 1 bis 5, **dadurch gekennzeichnet, dass** das Material des Tragkörpers (2) aus einem thermoplastischen Werkstoff gebildet ist.

7. Tragkörper nach einem der Ansprüche 1 bis 6, **dadurch gekennzeichnet, dass** die Dichtung (5) und die weitere Dichtung (8) aus einem elastomeren Werkstoff gebildet sind.

8. Tragkörper nach einem der Ansprüche 1 bis 8, **dadurch gekennzeichnet, dass** die Leitergeometrie (6) einen Sensor umfasst, der in der Durchbrechung angeordnet ist mit einer außerhalb angeordneten Auswerteeinheit verbindet.

9. Tragkörper nach Anspruch 8, **dadurch gekennzeichnet, dass** der Sensor medienseitig mit einem Elastomer bedeckt ist.

10. Verwendung des Tragkörpers (1) nach einem der vorherigen Ansprüche zum Verbinden von Kraftfahrzeugmotor-Komponenten mit einem Kraftfahrzeugmotorgehäuse.

## Claims

1. Supporting body (1) for the fluid-tight connection of machine elements, which supporting body (1) has an aperture (3) for passing media through and a first recess (4), which is assigned to the aperture (3) and which is provided with a seal (5), and a conductor geometry (6) which is partly embedded in the supporting body (2), **characterized in that** the supporting body (2) has a second recess (7), and **in that** a section of the conductor geometry (6) is arranged in the second recess (7), and **in that** the second recess (7) is provided with a further seal (8).

2. Supporting body according to Claim 1, **characterized in that** the first recess (4) and the second recess (7) are arranged adjacent to one another.

3. Supporting body according to Claim 1 or 2, **characterized in that** both end faces (9, 10) have a first recess (4).

4. Supporting body according to one of Claims 1 to 3, **characterized in that** the walls of the supporting body (1) and the conductor geometry (6) are pre-treated with a bonding agent.

5. Supporting body according to one of Claims 1 to 4, **characterized in that** the seal (5) and the further seal (8) are formed of the same material and in one piece.

6. Supporting body according to one of Claims 1 to 5, **characterized in that** the material from which the supporting body (2) is formed is a thermoplastic.

7. Supporting body according to one of Claims 1 to 6, **characterized in that** the seal (5) and the further seal (8) are formed from an elastomeric material.

8. Supporting body according to one of Claims 1 to 7, **characterized in that** the conductor geometry (6) comprises a sensor which is arranged in the aperture and is connected to an evaluating unit arranged outside.

9. Supporting body according to Claim 8, **characterized in that** the sensor is covered with an elastomer on the media side.

10. Use of the supporting body (1) according to one of the preceding claims for connecting motor vehicle engine components to a motor vehicle crankcase.

## Revendications

1. Corps de support (1) pour la liaison étanche aux fluides d'éléments de machine, qui présente un orifice (3) pour guider des fluides, ainsi qu'un premier évidement (4) qui est associé à l'orifice (3) et qui est pourvu d'un joint d'étanchéité (5) et une géométrie de guidage (6) qui est en partie encastrée dans le corps de support (2), **caractérisé en ce que** le corps de support (2) présente un deuxième évidement (7) et **en ce que** la géométrie de guidage (6) est disposée en partie dans le deuxième évidement (7) et **en ce que** le deuxième évidement (7) est pourvu d'un autre joint d'étanchéité (8).

2. Corps de support selon la revendication 1, **caractérisé en ce que** le premier évidement (4) et le deuxième évidement (7) sont disposés à côté l'un de l'autre.

3. Corps de support selon la revendication 1 ou 2, **caractérisé en ce que** les deux côtés frontaux (9, 10) présentent un premier évidement (4).

4. Corps de support selon l'une quelconque des revendications 1 à 3, **caractérisé en ce que** les parois du corps de support (1) et la géométrie de guidage (6) sont prétraitées avec un liant.

5. Corps de support selon l'une quelconque des revendications 1 à 4, **caractérisé en ce que** le joint d'étanchéité (5) et l'autre joint d'étanchéité (8) sont venus de matière et réalisés d'une seule pièce.

6. Corps de support selon l'une quelconque des revendications 1 à 5, en ce que le matériau du corps de support (2) est formé d'un matériau thermoplastique.

7. Corps de support selon l'une quelconque des revendications 1 à 6, **caractérisé en ce que** le joint d'étanchéité (5) et l'autre joint d'étanchéité (8) sont formés d'un matériau élastomère.

8. Corps de support selon l'une quelconque des revendications 1 à 7, **caractérisé en ce que** la géométrie de guidage (6) comprend un capteur qui est disposé dans l'orifice et qui est connecté à une unité d'analyse disposée à l'extérieur.

9. Corps de support selon la revendication 8, **caractérisé en ce que** le capteur est recouvert du côté du fluide par un élastomère.

10. Utilisation du corps de support (1) selon l'une quelconque des revendications précédentes, pour relier des composants d'un moteur de véhicule automobile à un carter de moteur de véhicule automobile.
